# FASCICULE DE BREVET EUROPEEN

(11) **EP 3 008 986 B1**
(45) Date de publication et mention de la délivrance du brevet: **12.07.2017**
(21) Numéro de dépôt: 15189508.3
(22) Date de dépôt: 13.10.2015
(51) Int. Cl.: A01C 5/06

(54) **ELÉMENT SEMEUR COMPORTANT UN DISPOSITIF DE FERMETURE DE SILLON PERFECTIONNÉ ET SEMOIR ÉQUIPÉ D'UN TEL ÉLÉMENT SEMEUR**
SÄEINHEIT MIT EINER VERBESSERTEN FURCHE-VERSCHLIESSVORRICHTUNG UND SÄMASCHINE MIT SOLCHEN SÄEINHEIT
SEEDING UNIT WITH AN IMPROVED FURROW CLOSING DEVICE AND SEED DRILL EQUIPPPED WITH SUCH A SEEDING UNIT

(30) Priorité: 14.10.2014 FR 1459830
(43) Date de publication de la demande: 20.04.2016
(73) Titulaire: KUHN S.A., 67700 Saverne (FR)
(72) Inventeur: AUDIGIE, Jean-Charles, 67330 Bouxwiller (FR); EBERHART, Julien, 57370 Veckersviller (FR)
(74) Mandataire: Esch, Esther Evelyne

(56) Documents cités:
- US-A- 5 235 922
- US-A- 5 341 754

## Description

La présente invention se rapporte au domaine technique général du machinisme agricole. L'invention concerne un élément semeur comportant un support sur lequel sont montés un système d'enterrage, un dispositif de contrôle de profondeur et un dispositif de fermeture, le dispositif de contrôle de profondeur est fixé sur un support au moyen d'une première articulation, l'axe de la première articulation s'étend derrière le dispositif de contrôle de profondeur, le dispositif de fermeture s'étend derrière le dispositif de contrôle de profondeur et est fixé sur le support au moyen d'une deuxième articulation, le dispositif de fermeture présente au moins une roue de rappuyage pivotant autour d'un axe de rotation. Elle se rapporte également à un semoir présentant un châssis qui supporte au moins un élément semeur.

Des éléments semeurs connus de ce type sont montés sur le châssis d'un semoir dans le but de déposer des graines en terre sur plusieurs lignes et selon un écartement précis. Un tel élément semeur comporte un support destiné à porter un système d'enterrage composé de deux disques d'ouverture, d'un dispositif de contrôle de profondeur à roues de jauge et d'un dispositif de fermeture. Le dispositif de contrôle de profondeur et le dispositif de fermeture sont articulés sur le support. La première articulation du dispositif de contrôle de profondeur est placée derrière les roues de jauge. Les roues de jauge sont donc poussées comme sur la plupart des semoirs monograine.

Le dispositif de fermeture est fixé à l'arrière du support via une deuxième articulation puisqu'il ferme et rappuie le sillon après l'introduction des graines. Le dispositif de fermeture comporte des roues de rappuyage qui roulent sur le sol pour fermer le sillon lorsque le semoir est déplacé dans le champ. Sur ces éléments semeurs connus, le dispositif de fermeture et notamment les roues de rappuyage ne réalisent pas toujours un recouvrement et un rappui des graines. La levée des graines est alors non homogène et les graines restées à l'air libre ne germent pas. La position des roues de rappuyage par rapport aux roues de jauge influe également sur la bonne fermeture du sillon sur la graine. Ceci est d'autant plus important pour des semis en courbe ou en dévers.

On constate aussi que la distance entre l'axe de rotation des roues de rappuyage et le point de fixation du dispositif de fermeture sur le support est courte. L'action du ressort est plutôt horizontale par rapport à la direction de l'effort à appliquer sur le dispositif de fermeture. Le bras de levier court et la position plutôt « à plat » du ressort entraînent un rappui du sillon qui est irrégulier. Le phénomène de pianotage du dispositif de fermeture sur le sol est accentué avec un bras de levier court. L'effort fournit par le ressort est, dans certaines conditions de travail, pas suffisant pour que l'action du dispositif de fermeture soit efficace.

Le brevet US 5 235 922 se rapporte à un semoir monograine comportant un système d'enterrage, un dispositif de contrôle de profondeur et un dispositif de fermeture. Le dispositif de contrôle de profondeur et le dispositif de fermeture sont fixés sur un support au moyen d'une même articulation dont l'axe s'étend derrière le dispositif de contrôle de profondeur, le dispositif de fermeture s'étendant derrière le dispositif de contrôle de profondeur.

L'objet de la présente invention vise donc à s'affranchir des inconvénients rencontrés dans l'état de la technique. Elle doit notamment proposer un élément semeur dont la fermeture et le rappui du sillon sont améliorés. L'invention vise également à un élément semeur avec un système de réglage de la pression de rappuyage plus efficace.

A cet effet, une importante caractéristique de l'invention consiste en ce que la distance entre l'axe de rotation et la deuxième articulation est supérieure ou égale à la distance entre l'axe de rotation et la première articulation et que l'axe de la première articulation est distinct de l'axe de la deuxième articulation. Grâce à cette caractéristique, l'action du dispositif de fermeture est plus régulière sur le sillon puisque le bras de levier est plus long. La fermeture du sillon est assurée et le rappui du sillon est régulier.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'un élément semeur conforme à l'invention,
- la **figure 2** représente une vue de détail de l'élément semeur de la figure 1,
- la **figure 3** représente une vue de détail du dispositif de fermeture selon un autre exemple de réalisation,
- la **figure 4** représente une vue latérale d'un semoir attelé à un tracteur dans une position de travail avec un élément semeur selon la figure 1,
- la **figure 5** représente une vue de dessus du semoir de la figure 4.

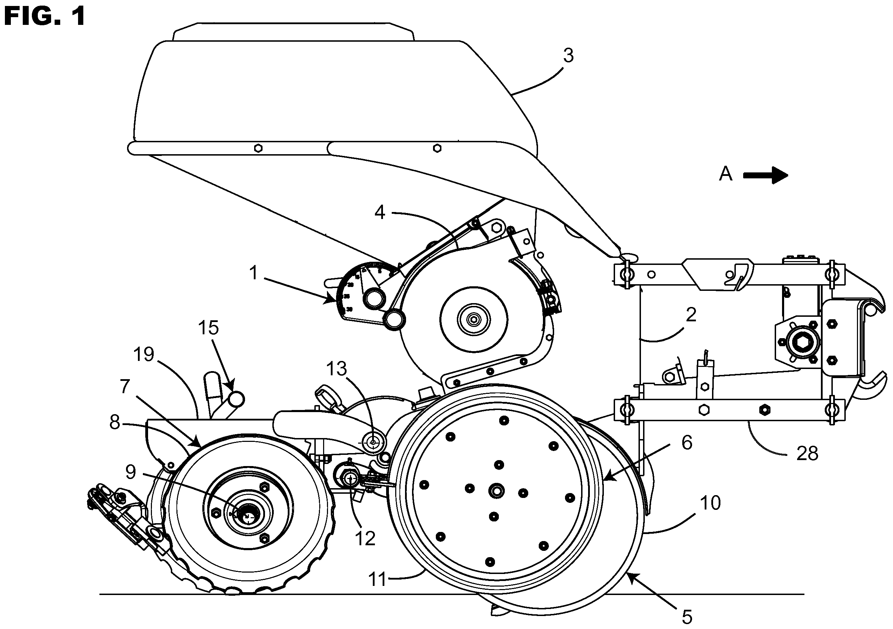

La figure 1 montre un élément semeur (1) conforme à l'invention. Durant le travail, l'élément semeur (1) est déplacé sur un champ dans le sens de la flèche (A).

Dans la suite de la description, les notions suivantes "avant", "arrière" et "devant", "derrière" sont définies par rapport à la direction d'avance (A). Un tel élément semeur (1) possède notamment un support (2) sur lequel sont montés une trémie (3), une distribution (4), un système d'enterrage (5), un dispositif de contrôle de profondeur (6) et un dispositif de fermeture (7). La trémie (3) constitue la réserve de graines destinée à alimenter la distribution (4). Cette dernière permet d'extraire une à une les graines de la trémie (3) et de les répartir à intervalle constant sur la ligne de semis. La distribution des graines est réalisée de manière mécanique ou assistée par un dispositif pneumatique. Dans l'exemple de réalisation représenté, la distribution (4) comporte un disque vertical et la sélection de la graine est assistée par un flux d'air en dépression. A la sortie de la distribution (4), les graines sont transportées vers le système d'enterrage (5) pour être mise en terre. Le système d'enterrage (5) crée un sillon à une profondeur déterminée pour y placer la graine. La profondeur de semis est donnée par le dispositif de contrôle de profondeur (6). Le dispositif de contrôle de profondeur (6) est disposé latéralement, au niveau de la chute des graines pour permettre au système d'enterrage (5) de suivre les dénivellations du sol sans décalage. Le dispositif de fermeture (7) s'étend derrière le dispositif de contrôle de profondeur (6), compte tenu de la direction d'avance (A). Le dispositif de fermeture (7) doit assurer la fermeture du sillon dans diverses conditions d'utilisation, liées à la nature ou à l'humidité du sol, tout en conservant une fiabilité et une tenue dans le temps acceptables. Pour cela, le dispositif de fermeture (7) comporte au moins une roue de rappuyage (8) qui tasse le sillon en pivotant autour d'un axe de rotation (9).

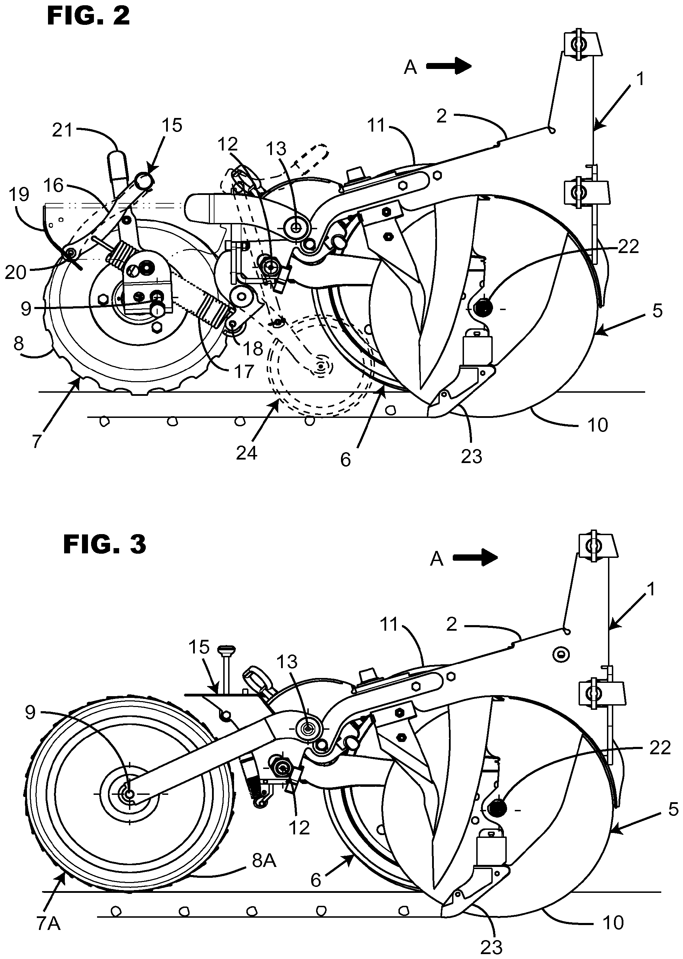

La figure 2 illustre plus en détail le système d'enterrage (5), le dispositif de contrôle de profondeur (6) et le dispositif de fermeture (7). Le système d'enterrage (5) est composé de deux disques d'ouverture (10). Le dispositif de contrôle de profondeur (6) est réalisé par au moins une roue de jauge (11). Le dispositif de contrôle de profondeur (6) est fixé sur un support (2) au moyen d'une première articulation (12) d'axe horizontal et sensiblement perpendiculaire à la direction d'avance (A). L'axe de la première articulation (12) s'étend derrière le dispositif de contrôle de profondeur (6). Le dispositif de fermeture (7) est fixé sur le support (2) au moyen d'une deuxième articulation (13) d'axe horizontal et sensiblement perpendiculaire à la direction d'avance (A). L'axe de la première articulation (12) est sensiblement parallèle à l'axe de la deuxième articulation (13). D'une manière avantageuse, une roue de jauge (11) est associée à chacun des disques d'ouverture (10). La roue de jauge (11) est placée latéralement sur le disque d'ouverture (10). De préférence, la position latérale de la roue de jauge (11) est telle que son point de contact avec le sol est aligné, en vue de côté, avec l'endroit où la graine va tomber au sol. Ainsi, les disques d'ouverture (10) peuvent suivre, sans décalage, toutes les dénivellations du sol et garantir une profondeur de semis régulière. Pour parfaire le placement des graines sur la ligne de semis, un soc (23) est placé entre les disques d'ouverture (10). Ce soc (23) permet de maintenir le sillon ouvert pour y placer les graines. Le fond de sillon a été représenté sur les figures 2 et 3. Seule une des roues de jauge (11) et une des roues de rappuyage (8) ont été représentées sur la figure 2. La roue de rappuyage (8) droite qui est avancée par rapport à l'autre roue de rappuyage a été cachée.

Dans l'exemple de réalisation des figures 1 et 2, le dispositif de fermeture (7) est constitué d'une roue de rappuyage double. Les roues de rappuyage (8) sont montées libres en rotation. Elles sont montées inclinées par rapport à un plan vertical médian (14) de l'élément semeur (1). On dit que les roues de rappuyage (8) sont disposées en « V ». Les roues de rappuyage (8) sont disposées symétriquement par rapport au plan vertical médian (14). Elles convergent vers le sillon. L'inclinaison des roues de rappuyage (8) permet une meilleure fermeture du sillon puisque de la terre est ramenée sur la ligne de semis ce qui favorise le contact entre la graine et le sol et donc la germination de la graine. Les roues de rappuyage (8) en « V » tassent le sol sur les côtés pour faire remonter de la terre au centre du sillon. L'axe de pivotement de chaque roue de rappuyage (8) s'étend ainsi dans un plan oblique, orienté angulairement par rapport audit plan vertical médian (14). Ainsi, le dispositif de fermeture (7) referme le sillon en repoussant et tassant la terre déplacée de part et d'autre du sillon. Dans cet exemple de réalisation, l'axe de rotation (9) correspond à l'axe passant par le point concourant des axes de pivotement des roues de rappuyage (8) disposées en « V ».

Pour éviter les coincements de pierres entre les roues de rappuyage (8), l'une des roues est décalée vers l'avant. Les roues de rappuyage (8) sont en acier lisse ou en acier cranté. Dans une alternative, les roues de rappuyage (8) présentent un bandage en caoutchouc. Dans ce cas, l'axe de rotation (9) (tel que représenté sur la figure 2) correspond au point de la droite passant par l'axe de pivotement de la roue de rappuyage (8) avant coupant le plan vertical médian (14).

La figure 3 illustre un dispositif de fermeture (7A) selon un autre exemple de réalisation. La roue double a été remplacée par une roue simple (8A). Cette roue simple (8A) est plus ou moins large en fonction des conditions de travail. Elle comporte un bandage pneumatique qui permet un rappuyage plus important en surface. Elle est utilisée en conditions sableuses. La roue simple (8A) pivote autour de l'axe de rotation (9) pour tasser le sillon.

Selon une importante caractéristique de l'invention, la distance entre l'axe de rotation (9) et la deuxième articulation (13) est supérieure ou égale à la distance entre l'axe de rotation (9) et la première articulation (12). Grâce à cette caractéristique, l'action du dispositif de fermeture (7) est plus régulière sur le sillon puisque le bras de levier est plus long. La fermeture du sillon est assurée et le rappui du sillon est régulier. La germination des graines est de ce fait améliorée et la levée sera homogène. L'axe de la première articulation (12) est distinct de l'axe de la deuxième articulation (13). Ainsi, même avec un bras de levier plus long, le point de rappui des roues de rappuyage (8) sur le sol est avancé par rapport à la roue de jauge (11) ce qui permet de mieux recouvrir les graines dans les virages et dans les dévers.

Selon une autre caractéristique de l'invention, la deuxième articulation (13) du dispositif de fermeture (7) s'étend en avant et au-dessus de la première articulation (12) du dispositif de contrôle de profondeur (6). La deuxième articulation (13) s'étend à proximité du quart supérieur arrière de la roue de rappuyage (8). Cette position haute de la deuxième articulation (13) permet d'augmenter la stabilité du dispositif de fermeture (7) et de réaliser un meilleur suivi et rappui du sillon.

Afin d'améliorer le contact entre la graine et le sol, le dispositif de fermeture (7) est équipé d'un système de réglage de la pression de rappuyage (15). Ce système de réglage de la pression de rappuyage (15) améliore l'action des roues de rappuyage (8) sur le sol. Le système de réglage de la pression de rappuyage (15) comporte notamment un levier (16) et un ressort (17) permettant de lester le dispositif de fermeture (7). D'une manière avantageuse, l'angle entre la droite passant par la deuxième articulation (13) et l'axe de rotation (9) et la droite longitudinale passant par le centre du ressort (17) est supérieur à 45°. De cette manière, l'orientation de l'effort appliqué par le ressort (17) est plus proche de la verticale et donc de la direction de l'effort de la roue de rappuyage (8) sur le sol. L'effort à exercer par le ressort (17) est mieux orienté et plus efficace. Le rappui est par conséquent plus important. De préférence, le ressort (17) tangente l'axe de rotation (9). Le ressort (17) est fixé d'une part à un point d'application (18) et d'autre part au levier (16). Il s'agit d'un ressort de traction à spires jointives. De manière alternative, le ressort (17) est un ressort de torsion.

Pour protéger ce système de réglage de pression (15) des agressions extérieures et notamment de la terre, ce dernier est disposé dans un caisson (19). Le levier (16) est articulé sur le caisson (19) par l'intermédiaire d'une troisième articulation (20). La troisième articulation (20) est localisée à l'arrière du caisson (19). La pression de rappuyage est ajustée au moyen du levier (16) qui est placé dans l'un des crans ménagés dans le caisson (19). Le caisson (19) est pourvu de cinq crans de réglage. La pression de rappuyage du dispositif de fermeture (7) peut donc être ajustée pour être adaptée aux types de sol. Le levier (16) pivote vers l'avant pour diminuer la pression de rappuyage alors qu'il pivote vers l'arrière pour augmenter la pression de rappuyage. D'une manière avantageuse, le levier (16) est galbé. Grâce à une telle courbure, le nombre de position de réglage est augmenté. En effet, le levier (16) peut être monté avec la courbure dirigée vers l'avant (représenté en traits continus sur la figure 2) et le levier (16) peut être monté avec la courbure dirigée vers l'arrière (représenté en traits pointillés sur la figure 2). Grâce à cette disposition différente du levier (16), le nombre de position de réglage du dispositif de fermeture (7) est augmenté avec le même ressort (17).

Pour assurer un rappui du sillon efficace, le dispositif de fermeture (7) doit être écarté au minimum du dispositif de contrôle de profondeur (6). Le suivi du sillon est alors même assuré lorsque l'élément semeur (1) est utilisé sur un terrain en dévers ou pour un semis en courbe.

Le dispositif de fermeture (7) comporte un autre levier (21) permettant de régler l'angle d'ouverture des roues de rappuyage (8). Le levier de réglage (21) est déplacé vers l'avant pour augmenter l'angle d'ouverture des roues de rappuyage (8), c'est la position courante d'utilisation. L'ouverture des roues de rappuyage (8) favorise la fermeture du sillon et le recouvrement des graines. En conditions pierreuses, la fermeture des roues de rappuyage (8) évite le coincement des pierres. Pour cela, le levier de réglage (21) est déplacé vers l'arrière pour diminuer l'angle d'ouverture des roues de rappuyage (8).

Dans certains cas, l'élément semeur (1) comporte un équipement intermédiaire (24) disposé entre le dispositif de contrôle de profondeur (6) et le dispositif de fermeture (7). L'équipement intermédiaire (24) représenté sur la figure 2 est illustré en traits interrompus, il s'agit d'une roulette de plombage qui appuie la graine dans le fond du sillon. La roulette de plombage permet un meilleur contact entre graine et terre pour une germination optimisée.

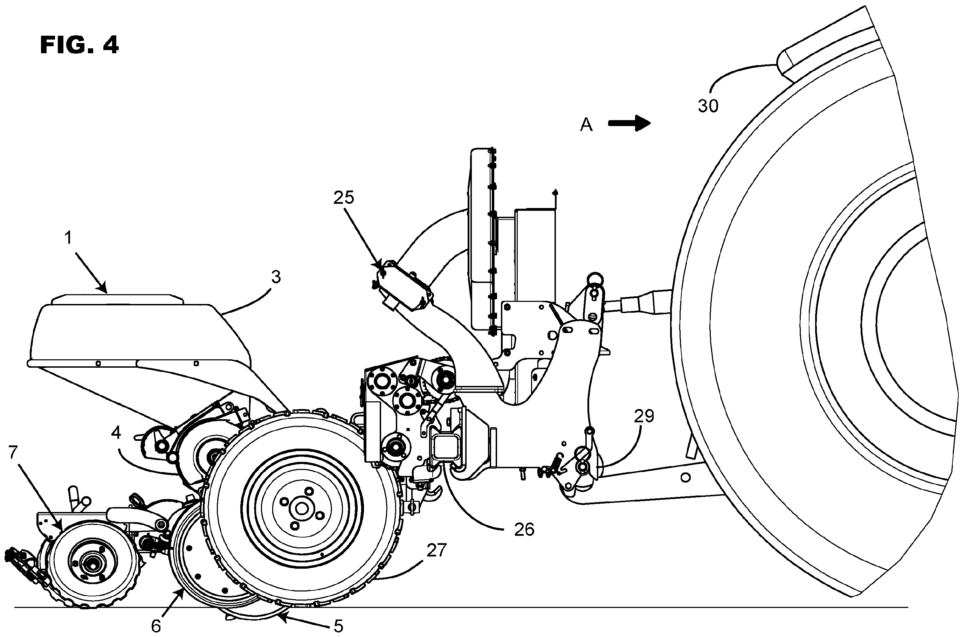

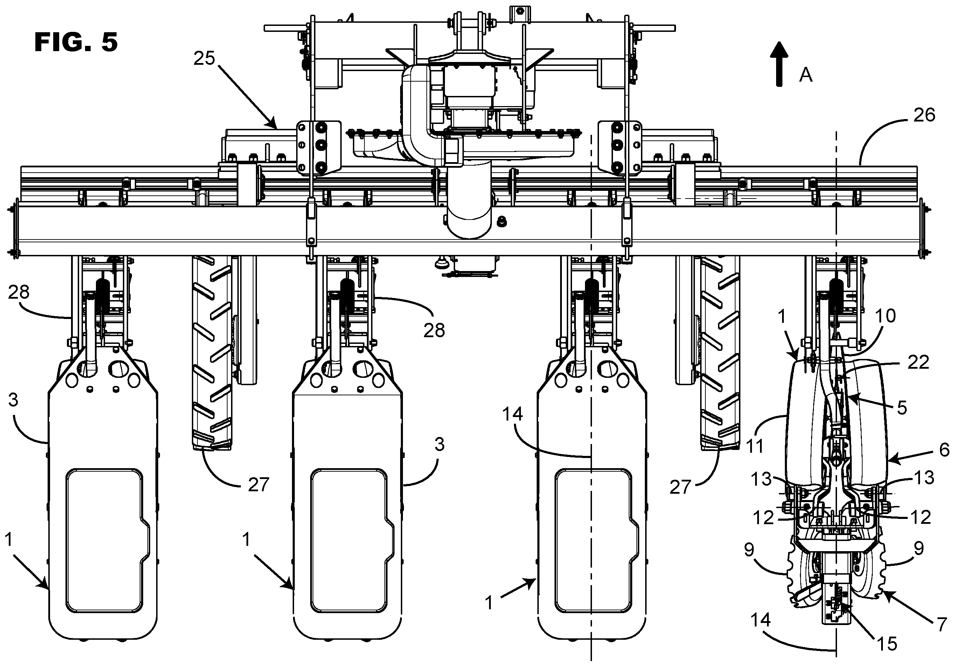

La machine agricole représentée sur la figure 4 est un semoir (25) de précision ou monograine. Un tel semoir (25) distribue les graines une à une sur la ligne de semis à des écartements constants. Ce semoir (25) comporte un châssis (26) qui supporte au moins un élément semeur (1) et qui repose sur le sol, au travail, via des roues (27). Le nombre d'éléments semeurs (1) correspond au nombre de rangs de semis. La figure 5 illustre le semoir (25) en vue de dessus avec quatre éléments semeurs (1) répartis de manière régulière sur le châssis (26). Chaque élément semeur (1) est monté sur le châssis (26) au moyen d'un parallélogramme (28) déformable qui lui permet de se déplacer parallèlement au sol. Dans certains cas, l'écartement entre les éléments semeurs (1) voisins est irrégulier.

Le semoir (25) représenté sur la figure 4 est dans une configuration de travail. Le châssis (26) comporte un cadre d'attelage (29) permettant d'établir une liaison au dispositif d'attelage d'un tracteur (30). Le tracteur (30) déplace le semoir (25) suivant la direction indiquée par la flèche (A). Afin de garantir un écartement constant entre les graines semées, la vitesse de rotation de la distribution (4) est proportionnelle à la vitesse d'avance du semoir (25). L'entraînement de la distribution (4) est effectué via une boîte de vitesses, une chaîne et des pignons ou via un engrenage conique, via un moteur électrique ou hydraulique.

Sur la figure 5, le système d'enterrage (5) avec ses deux disques d'ouverture (10) est représenté sur l'un des éléments semeurs (1). Chaque disque d'ouverture (10) est orienté par rapport à la verticale pour définir un angle d'attaque. Cet angle d'attaque permet au disque d'ouverture (10) de découper le sol en le soulevant d'un côté. Chaque disque d'ouverture (10) tourne autour d'un pivot (22) d'axe sensiblement horizontal. Le pivot (22) est avantageusement incliné par rapport à l'horizontale pour pouvoir déposer les graines au fond du sillon. Ainsi, le disque d'ouverture (10) réalise l'ouverture et la dépose des graines dans le sillon.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Élément semeur (1) comportant un support (2) sur lequel sont montés un système d'enterrage (5), un dispositif de contrôle de profondeur (6) et un dispositif de fermeture (7), le dispositif de contrôle de profondeur (6) est fixé sur un support (2) au moyen d'une première articulation (12) d'axe horizontal, l'axe de la première articulation (12) s'étendant derrière le dispositif de contrôle de profondeur (6), le dispositif de fermeture (7) s'étend derrière le dispositif de contrôle de profondeur (6) et est fixé sur le support (2) au moyen d'une deuxième articulation (13) d'axe horizontal, le dispositif de fermeture (7) présente au moins une roue de rappuyage (8) pivotant autour d'un axe de rotation (9), ***caractérisé en ce que*** la distance entre l'axe de rotation (9) et la deuxième articulation (13) est supérieure ou égale à la distance entre l'axe de rotation (9) et la première articulation (12) et que l'axe de la première articulation (12) est distinct de l'axe de la deuxième articulation (13).

2. Élément semeur selon la revendication 1, ***caractérisé en ce que*** la deuxième articulation (13) du dispositif de fermeture (7) s'étend en avant et au-dessus de la première articulation (12) du dispositif de contrôle de profondeur (6).

3. Élément semeur selon la revendication 1 ou 2, ***caractérisé en ce que*** le dispositif de fermeture (7) dispose d'un système de réglage de la pression de rappuyage (15) comportant un levier (16) et un ressort (17).

4. Élément semeur selon la revendication 3, ***caractérisé en ce que*** le système de réglage de la pression (15) est disposé dans un caisson (19).

5. Élément semeur selon la revendication 4, ***caractérise en ce que*** le levier (16) est articulé sur le caisson (19) par l'intermédiaire d'une troisième articulation (20).

6. Élément semeur selon la revendication 3 ou 5, ***caractérisé en ce que*** le levier (16) pivote vers l'avant pour diminuer la pression de rappuyage et que le levier (16) pivote vers l'arrière pour augmenter la pression de rappuyage des roues de rappuyage (8).

7. Élément semeur selon la revendication 3, ***caractérisé en ce que*** le levier (16) est galbé.

8. Élément semeur selon la revendication 3, ***caractérisé en ce que*** le ressort (17) s'étend dans le plan vertical médian (14) de l'élément semeur (1).

9. Élément semeur selon la revendication 3, ***caractérisé en ce que*** l'angle entre la droite passant par la deuxième articulation (13) et l'axe de rotation (9) et la droite longitudinale passant par le ressort (17) est supérieur à 45°.

10. Élément semeur selon la revendication 3, ***caractérisé en ce que*** le ressort (17) tangente l'axe de rotation (9).

11. Élément semeur selon l'une quelconque des revendications 1 à 10, ***caractérisé en ce qu***'un équipement intermédiaire (24) est disposé entre le dispositif de contrôle de profondeur (6) et le dispositif de fermeture (7).

12. Semoir (25) comportant un châssis (26) sur lequel est réparti au moins un élément semeur (1) tel que défini selon l'une des revendications 1 à 11.

## Patentansprüche

1. Säelement (1) mit einer Halterung (2), auf der ein Tiefenführungssystem (5), eine Arbeitstiefensteuervorrichtung (6) und eine Schließvorrichtung (7) angebracht sind, wobei die Arbeitstiefensteuervorrichtung (6) mittels eines ersten Gelenks (12) mit horizontaler Achse auf einer Halterung (2) befestigt ist, wobei sich die Achse des ersten Gelenks (12) hinter der Arbeitstiefensteuervorrichtung (6) erstreckt, wobei sich die Schließvorrichtung (7) hinter der Arbeitstiefensteuervorrichtung (6) erstreckt und mittels eines zweiten Gelenks (13) mit horizontaler Achse auf der Halterung (2) befestigt ist, wobei die Schließvorrichtung (7) mindestens ein Rückverfestigungsrad (8) aufweist, das um eine Rotationsachse (9) schwenkt, ***dadurch gekennzeichnet,* dass** der Abstand zwischen der Rotationsachse (9) und dem zweiten Gelenk (13) größer oder gleich ist wie der Abstand zwischen der Rotationsachse (9) und dem ersten Gelenk (12) und dass sich die Achse des ersten Gelenks (12) von der Achse des zweiten Gelenks (13) unterscheidet.

2. Säelement nach Anspruch 1, ***dadurch gekennzeichnet,* dass** sich das zweite Gelenk (13) der Schließvorrichtung (7) vor und über dem ersten Gelenk (12) der Arbeitstiefensteuervorrichtung (6) erstreckt.

3. Säelement nach Anspruch 1 oder 2, ***dadurch gekennzeichnet,* dass** die Schließvorrichtung (7) über ein Einstellsystem (15) für den Rückverfestigungsdruck mit einem Hebel (16) und einer Feder (17) verfügt.

4. Säelement nach Anspruch 3, ***dadurch gekennzeichnet,* dass** das Einstellsystem (15) für den Rückverfestigungsdruck in einem Kasten (19) angeordnet ist.

5. Säelement nach Anspruch 4, ***dadurch gekennzeichnet,* dass** der Hebel (16) am Kasten (19) mittels eines dritten Gelenks (20) angelenkt ist.

6. Säelement nach Anspruch 3 oder 5, ***dadurch gekennzeichnet,* dass** der Hebel (16) nach vorne schwenkt, um den Rückverfestigungsdruck zu verringern, und dass der Hebel (16) nach hinten schwenkt, um den Rückverfestigungsdruck der Rückverfestigungsräder (8) zu erhöhen.

7. Säelement nach Anspruch 3, ***dadurch gekennzeichnet,* dass** der Hebel (16) gerundet ist.

8. Säelement nach Anspruch 3, ***dadurch gekennzeichnet,* dass** sich die Feder (17) in der vertikalen Mittelebene (14) des Säelements (1) erstreckt.

9. Säelement nach Anspruch 3, ***dadurch gekennzeichnet,* dass** der Winkel zwischen der Gerade, die durch das zweite Gelenk (13) und die Rotationsachse (9) verläuft, und der Längsgerade, die durch die Feder (17) verläuft, größer ist als 45°.

10. Säelement nach Anspruch 3, ***dadurch gekennzeichnet,* dass** die Feder (17) die Rotationsachse (9) tangiert.

11. Säelement nach irgendeinem der Ansprüche 1 bis 10, ***dadurch gekennzeichnet,* dass** eine Zwischenausstattung (24) zwischen der Arbeitstiefensteuervorrichtung (6) und der Schließvorrichtung (7) angeordnet ist.

12. Sämaschine (25) mit einem Rahmen (26) auf dem mindestens ein Säelement (1) nach irgendeinem der Ansprüche 1 bis 11 verteilt ist.

## Claims

1. Seeder element (1) including a support (2) on which are mounted a seed burying system (5), a depth control device (6) and a closing device (7), the depth control device (6) being attached to a support (2) by means of a first articulation (12) with a horizontal axis, the axis of the first articulation (12) extending behind the depth control device (6), the closing device (7) extending behind the depth control device (6) and attached to the support (2) by means of a second articulation (13) with a horizontal axis, the closing device (7) having at least one tamping wheel (8) swivelling around a rotation axis (9), ***characterised in* that** the distance between the rotation axis (9) and the second articulation (13) is greater than or equal to the distance between the rotation axis (9) and the first articulation (12) and that the axis of the first articulation (12) is separate from the axis of the second articulation (13).

2. Seeder element according to claim 1, ***characterised in* that** the second articulation (13) of the closing device (7) extends in front of and above the first articulation (12) of the depth control device (6).

3. Seeder element according to claim 1 or 2, ***characterised in* that** the closing device (7) has a tamping pressure adjustment system (15) including a lever (16) and a spring (17).

4. Seeder element according to claim 3, ***characterised in* that** the pressure adjustment system (15) is placed in a casing (19).

5. Seeder element according to claim 4, ***characterised in* that** the lever (16) is articulated to the casing (19) by means of a third articulation (20).

6. Seeder element according to claim 3 or 5, ***characterised in* that** the lever (16) swivels forwards to reduce the tamping pressure and that the lever (16) swivels backwards to increase the tamping pressure of the tamping wheels (8).

7. Seeder element according to claim 3, ***characterized in* that** the lever (16) is curved.

8. Seeder element according to claim 3, ***characterised in* that** the spring (17) extends in the vertical midplane (14) of the seeder element (1).

9. Seeder element according to claim 3, ***characterised in* that** the angle between the straight line passing through the second articulation (13) and the rotation axis (9) and the longitudinal straight line passing through the spring (17) is greater than 45°.

10. Seeder element according to claim 3, ***characterised in* that** the spring (17) is positioned at a tangent to the rotation axis (9).

11. Seeder element according to any one of the claims 1 to 10, ***characterised in* that** an intermediary device (24) is positioned between the depth control device (6) and the closing device (7).

12. Seed drill (25) including a chassis (26) on which is positioned at least one seeder element (1) as defined according to one of the claims 1 to 11.
